# DEMANDE DE BREVET EUROPEEN

(11) **EP 4 517 219 A1**
(43) Date de publication de la demande: **05.03.2025**
(21) Numéro de dépôt: 24193679.8
(22) Date de dépôt: 08.08.2024
(51) Int. Cl.: F25B 15/04, F25B 41/40

(54) **TRANSFORMATEUR DE CHALEUR À ABSORPTION OPTIMISÉ PAR ÉJECTEUR**

(30) Priorité: 18.08.2023 FR 2308788
(71) Demandeur: Commissariat à l'Energie Atomique et aux Energies Alternatives, 75015 Paris (FR)
(72) Inventeur: COLLIGNON, Romain, 38054 GRENOBLE Cedex 09 (FR); PHAN, Hai Trieu, 38054 GRENOBLE Cedex 09 (FR)
(74) Mandataire: Hautier IP

(57) **Abrégé**

L'invention concerne un transformateur de chaleur à absorption (TCA), destiné à la production de chaleur haute température comprenant un évaporateur (2), un absorbeur (3) fonctionnant tous les deux à haute pression, un générateur (4) fonctionnant à basse pression et un condenseur (5), le transformateur (1) comprend un éjecteur (6) placé entre le générateur (4) et le condenseur (5), et une dérivation fluidique (B) agencée, entre l'évaporateur (2) et l'éjecteur (6), en dérivation d'une connexion fluidique (A) reliant l'évaporateur (2) à l'absorbeur (3), et l'éjecteur (6) comprend une entrée de fluide primaire (60) à haute pression en connexion fluidique avec l'évaporateur (2) par la dérivation fluidique (B), une entrée de fluide secondaire (61) à basse pression en connexion fluidique avec une sortie (41) du générateur (4) et une sortie de mélange (62) à pression intermédiaire en connexion fluidique avec une entrée (51) du condenseur (5), le condenseur (5) fonctionnant à pression intermédiaire.

## Description

La présente invention concerne un transformateur de chaleur à absorption optimisé par éjecteur. L'invention trouvera son application pour la production de chaleur à haute température classiquement supérieure à 100°C pour l'industrie qui soit efficace même lorsque l'ambiance est chaude.

### ETAT DE LA TECHNIQUE

À ce jour, 26 % de la demande de chaleur industrielle concerne des températures de 100°C à 200°C, avec un fort besoin de décarbonation pour répondre à l'objectif zéro émission nette de CO₂ d'ici à 2050.

Parmi les solutions pouvant être mises en oeuvre pour atteindre ces objectifs, les pompes à chaleur haute température (supérieures à 100°C) sont des technologies prometteuses. Toutefois, de nombreux verrous technologiques liés à la performance et la fabrication des compresseurs ainsi qu'à l'utilisation des réfrigérants à faible impact CO₂, doivent être levés. Une solution émergente est de remplacer les compresseurs par un système à absorption ammoniac/eau (NH₃/H₂O). Cette technologie peut contribuer à la réduction de la consommation énergétique finale, en accord avec les indications contenues dans le Cadre européen énergie-climat 2030 et formalisées en France par la LTECV (Loi pour la Transition Energétique et la Croissance Verte) promulguée en 2015.

Les pompes à chaleur par absorption également connues comme transformateur de chaleur à absorption (TCA) ou Absorption Heat Transformer (AHT) en anglais nécessitent un refroidissement au niveau du condenseur. Ce refroidissement est classiquement réalisé par des aérothermes avec des rejets de chaleur vers l'ambiance. Toutefois, lorsque l'ambiance est chaude, par exemple en période estivale, à partir de 25°C environ, ce type de dispositif tend à perdre très rapidement son efficacité, voire même s'arrêter de fonctionner.

On connait par ailleurs, le document DE 22 16 203 présentant un système à absorption pour la réfrigération. Ce système n'est pas adapté à la production de chaleur et d'autant plus en ambiance chaude.

Il existe donc le besoin d'un dispositif de production de chaleur haute température écologique, économique et efficace lors de températures extérieures chaudes à partir de 25°C par exemple.

### RESUME

Pour atteindre cet objectif, selon un mode de réalisation on prévoit un transformateur de chaleur à absorption destiné à la production de chaleur, avantageusement haute température, comprenant un circuit fluidique recevant une solution de travail formée d'un couple réfrigérant/absorbant et comprenant successivement en connexion fluidique: un évaporateur, préférentiellement fonctionnant à haute pression, un absorbeur préférentiellement fonctionnant à haute pression et destiné à la production de chaleur haute température, un générateur préférentiellement fonctionnant à basse pression et un condenseur, le circuit fluidique comprend une pompe agencée entre le condenseur et l'évaporateur, une pompe à solution agencée entre le générateur et l'absorbeur, et un détendeur agencé en parallèle de la pompe à solution entre l'absorbeur et le générateur, le transformateur comprend, agencé sur le circuit fluidique, un éjecteur placé entre le générateur et le condenseur, et une dérivation fluidique agencée, entre l'évaporateur et l'éjecteur, en dérivation d'une connexion fluidique reliant l'évaporateur à l'absorbeur, et l'éjecteur comprend une entrée de fluide primaire, préférentiellement à haute pression, en connexion fluidique avec l'évaporateur par la dérivation fluidique, une entrée de fluide secondaire, préférentiellement à basse pression, en connexion fluidique avec une sortie du générateur et une sortie de mélange préférentiellement à pression intermédiaire en connexion fluidique avec une entrée du condenseur, préférentiellement le condenseur fonctionnant à pression intermédiaire.

L'architecture de ce transformateur de chaleur à absorption comprenant un éjecteur permet de garantir la valorisation de chaleur dans des conditions de fonctionnement réelles plus larges que les systèmes de l'état de la technique.

Le transformateur de chaleur selon l'invention permet de générer de la chaleur haute température, avantageusement au moins de 100°C, à partir d'une source de chaleur à moyenne température, préférentiellement de la chaleur fatale ayant une température de l'ordre de minimum 80°C, tout en étant peu consommateur d'énergie électrique, et cela même lorsque la température extérieure dépasse 25°C.

L'éjecteur ainsi agencé définit une pression intermédiaire au niveau du condenseur ce qui assure une condensation de réfrigérant de la solution de travail même avec une source froide au condenseur plus chaude, notamment au-dessus de 25°C sans modifier la basse pression régnant au niveau du générateur et assurant un fonctionnement optimal du transformateur de chaleur et donc la production de chaleur au niveau de l'absorbeur.

Cet agencement avec deux pompes en parallèles sur le transformateur de chaleur à absorption implique une régulation supplémentaire par rapport à une machine frigorifique à absorption.

La présence de ces pompes et notamment celle placée entre le condenseur et l'évaporateur assure les niveaux de pression revendiqués dans chaque composant du transformateur de chaleur et qui permet la production de chaleur au niveau de l'absorbeur.

Selon un autre aspect, l'invention concerne avantageusement selon une deuxième configuration de fonctionnement un procédé de production de chaleur haute température par un transformateur de chaleur à absorption, tel que décrit ci-dessus et plus avant dans la description, comprenant la circulation d'un flux de solution de travail formée par un couple réfrigérant/absorbant et d'un flux de réfrigérant dans le circuit fluidique, l'entrée de fluide primaire de l'éjecteur est alimentée par au moins une partie d'un flux de réfrigérant à l'état gazeux et à haute pression issue de l'évaporateur et que l'entrée de fluide secondaire de l'éjecteur est alimentée par un flux de réfrigérant à l'état gazeux , par exemple la totalité, et à basse pression issue du générateur et que l'éjecteur produit un mélange de réfrigérant à pression intermédiaire sortant par la sortie du mélange en connexion fluidique avec le condenseur fonctionnant à pression intermédiaire.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par le dessin d'accompagnement suivant :
La figure 1 représente un schéma du transformateur de chaleur selon un premier mode de réalisation de l'invention.
La figure 2 représente un schéma du transformateur de chaleur selon un deuxième mode de réalisation de l'invention.

Le dessin est donné à titre d'exemple et n'est pas limitatif de l'invention. Il constitue une représentation schématique de principe destinée à faciliter la compréhension de l'invention et n'est pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- Selon un exemple, le couple réfrigérant/absorbant formant la solution de travail est ammoniac/eau (NH3/H2O) ;
- Selon un exemple, la basse pression est inférieure à la moyenne pression qui est elle-même inférieure à la haute pression ;
- Selon un exemple, la basse pression est inférieure ou égale à 9bar ou 900Kpa, la haute pression est supérieure ou égale à 25 bar ou 2500 KPa et la pression intermédiaire est supérieure à 10 bar ou 1000 KPa et inférieure à 20 bar ou 20000KPa ;
- Selon un exemple, le transformateur comprend au moins un premier organe de commande agencé sur le circuit fluidique à la jonction entre la dérivation fluidique B et la connexion fluidique A, ou sur la dérivation fluidique B, pouvant être une vanne trois voies, préférentiellement une vanne deux voies V1.
- Selon un exemple, le transformateur comprend une unité de commande configurée pour commander le au moins un premierorgane de commande de sorte à assurer la répartition du réfrigérant vers l'absorbeur 3 et/ou l'éjecteur 6;
- Selon un exemple, le condenseur 5 comprend une source froide 13 destinée à assurer le refroidissement au sein du condenseur 5, la source froide 13 étant à une température maximale inférieure ou égale à 45 °C ;
- Selon un exemple, le transformateur est configuré pour prendre alternativement
   - une première configuration de fonctionnement lorsqu'une source froide 13 du condenseur 5 présente une température inférieure ou égale à une température de consigne et dans laquelle le premier organe de commande est contrôlé par l'unité de commande pour bloquer la circulation fluidique dans la dérivation fluidique B et dans l'éjecteur 6,
   - une deuxième configuration de fonctionnement lorsque la source froide 13 du condenseur 5 présente une température supérieure à une température de consigne et dans laquelle le premier organe de commande est contrôlé par l'unité de commande pour autoriser la circulation fluidique dans la dérivation fluidique B et dans l'éjecteur 6.
- Selon un exemple, le transformateur comprend une deuxième dérivation fluidique O agencée entre le générateur 4 et le condenseur 5, en dérivation de l'éjecteur 6, et une vanne trois voies V2, également dénommé deuxième organe de commande, agencée en amont de l'éjecteur 6 sur une connexion fluidique I reliant le générateur 4 à l'éjecteur 6 et une unité de commande configurée pour commander la vanne trois voies V2 de sorte à assurer la répartition du réfrigérant vers la deuxième dérivation fluidique 5 et/ou l'éjecteur 6.
- Selon un exemple, le transformateur est configuré pour prendre alternativement
   - une première configuration de fonctionnement lorsqu'une source froide 13 du condenseur 5 présente une température inférieure ou égale à une température de consigne et dans laquelle la vanne trois voies V2 est contrôlée par l'unité de commande pour autoriser la circulation fluidique dans la deuxième dérivation fluidique O et bloquer, c'est-à-dire empêcher, la circulation fluidique dans l'éjecteur 6,
   - une deuxième configuration de fonctionnement lorsque la source froide 13 du condenseur 5 présente une température supérieure à une température de consigne et dans laquelle la vanne trois voies V2 est contrôlée par l'unité de commande pour autoriser la circulation fluidique dans l'éjecteur 6, et avantageusement bloquer la circulation fluidique dans la deuxième dérivation fluidique O ou autoriser une circulation partielle dans la deuxième dérivation fluidique O.
- Selon un exemple, le procédé est tel que dans une première configuration alternative de fonctionnement la circulation du flux de solution de travail ne passe pas dans l'éjecteur 6.
- Selon un exemple, le procédé est tel que l'unité de commande contrôle le premier organe de commande et la vanne trois voies V2 de sorte à prendre alternativement la première configuration ou la deuxième configuration.
- Selon un exemple, le procédé est tel que la pompe 7 assure l'augmentation de la pression du flux de réfrigérant à l'état liquide et à pression intermédiaire issu du condenseur 5 jusqu'à une haute pression.
- Selon un exemple la source froide 13 est de l'air ambiant.
- Selon un exemple, le procédé est tel que l'unité de commande contrôle le premier organe de commande et la vanne trois voies V2 de sorte à prendre
   - une première configuration de fonctionnement lorsque une source froide 13 du condenseur 5 présente une température inférieure ou égale à une température de consigne et dans laquelle le premier organe de commande est contrôlé par l'unité de commande pour bloquer la circulation fluidique dans la dérivation fluidique B et dans l'éjecteur 6, la vanne trois voies V2 est contrôlée par l'unité de commande pour autoriser la circulation fluidique dans la deuxième dérivation fluidique O et bloquer la circulation fluidique dans l'éjecteur (6), ou
   - une deuxième configuration de fonctionnement lorsque la source froide 13 du condenseur 5 présente une température supérieure à une température de consigne et dans laquelle le premier organe de commande est contrôlé par l'unité de commande pour autoriser la circulation fluidique dans la dérivation fluidique B et dans l'éjecteur 6 et la vanne trois voies V2 est contrôlée par l'unité de commande pour autoriser la circulation fluidique dans l'éjecteur 6, et avantageusement bloquer la circulation fluidique dans la deuxième dérivation fluidique O ou autoriser une circulation partielle dans la deuxième dérivation fluidique O.

Dans la présente description, l'expression « A fluidiquement raccordé à B» est synonyme de " A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

On entend par chaud, froid, refroidi, une température relative par rapport à un autre point du système.

On entend par un paramètre "sensiblement égal/supérieur/inférieur à" ou "de l'ordre de" une valeur donnée, que ce paramètre est égal/supérieur/inférieur à la valeur donnée, à plus ou moins 10 % près, voire à plus ou moins 5 % près, de cette valeur.

Les termes "premier", "deuxième" et "troisième", etc. sont utilisés simplement comme des étiquettes, et ne sont pas destinés à imposer des exigences numériques sur leurs objets

Le transformateur de chaleur à absorption (TCA) 1 fonctionne avec un cycle différent d'une machine à absorption où la production de froid est recherchée. Ici, c'est une production de chaleur qui est recherchée. Le transformateur de chaleur à absorption 1 est alimenté par une source de chaleur 11 au niveau du générateur 4, par exemple à une température de l'ordre de 70-80°C et produit au niveau de l'absorbeur 3 une source chauffée 14 à une température supérieure ou égale à 100°C.

Avantageusement, la source de chaleur 11 est de la chaleur fatale issue de procédés industriels par exemple ou une chaleur produite par une énergie renouvelable.

Un transformateur de chaleur à absorption 1 est une pompe à chaleur à absorption thermique utilisant une solution de travail basée sur des couples réfrigérant/sorbant présentant de fortes affinités. Ce transformateur présente de faibles consommations électriques, l'énergie principale étant issue de la source thermique, permettant de limiter le coût de fonctionnement dans le cas de la valorisation d'une source d'énergie à bas coût ou de la chaleur fatale. De plus, les fluides frigorigènes ou réfrigérants utilisés dans les transformateurs de chaleur à absorption 1 ne présentent aucun ou très faible impact environnemental, sur le réchauffement climatique (GWP pour Global warning potential ou PRG pour Potentiel de Réchauffement Global = 0), ou sur la couche d'ozone (ODP pour Ozone déplétion potential ou PDO pour potentiel de déplétion ozonique = 0).

Ce type de transformateur de chaleur fonctionne grâce à la faculté de certains liquides d'absorber (réaction exothermique) et de désorber (réaction endothermique) une vapeur. Ils utilisent également le fait que la solubilité de cette vapeur dans le liquide dépende de la température et de la pression. Ainsi, ces transformateurs utilisent comme solution de travail un mélange binaire, dont l'un des composants est plus volatil que l'autre, et constitue le fluide frigorigène.

Le transformateur de chaleur à absorption 1 comprend un circuit fluidique à absorption configuré pour assurer la connexion fluidique des différents composants du transformateur de chaleur à absorption 1. Le circuit fluidique à absorption est un circuit fermé destiné à recevoir la solution de travail.

Selon un mode de réalisation de l'invention, le TCA 1 comprend une solution de travail comprenant le couple fluide frigorigène/absorbant choisi parmi préférentiellement le couple ammoniac/eau (NH3/H₂O) ou éventuellement le couple eau/Bromure de Lithium (H₂O/LiBr).

Selon l'invention, le couple NH₃/H₂O est utilisable pour des applications de chauffage. De plus, ce couple permet de travailler à pression supérieure à la pression ambiante.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après.

L'avantage de ce cycle à absorption est que la compression mécanique est remplacée par une compression thermochimique qui produit de la chaleur. Le seul apport d'énergie primaire nécessaire se situe au niveau des pompes 7 et 8, mais le travail est environ 96 fois inférieur au travail qu'un compresseur de vapeur doit fournir pour des conditions de fonctionnement similaires.

La solution de travail est dite riche, car la concentration en fluide frigorigène est plus importante que dans la solution de travail dite pauvre.

Un transformateur de chaleur à absorption 1 (TCA) comprend quatre échangeurs principaux, évaporateur 2, absorbeur 3, générateur 4 et condenseur 5, et avantageusement de un à trois échangeurs secondaires.

Le rôle des trois échangeurs secondaires est d'améliorer les performances de la machine : un rectifieur (non représenté) agencé entre le générateur 4 et le condenseur 5, un premier économiseur 15 agencé entre le condenseur 5 et l'évaporateur 2 pour jouer le rôle de préchauffage et un deuxième économiseur 16 agencé entre l'absorbeur 3 et le générateur 4 sur le circuit à solution décrit ci-après.

Selon une possibilité, le TCA 1 comprend également au moins une pompe à solution 8 et un détendeur 9 également dénommé vanne de détente.

Selon l'invention, le TCA 1 comprend une pompe 7 agencée entre le condenseur 5 et l'évaporateur 2.

Le fluide frigorigène (ou réfrigérant) de la solution de travail produit dans le générateur 4 circule entre la sortie 41 du générateur 4 et l'entrée 30 de l'absorbeur 3 en passant successivement par l'éjecteur 6 ou selon un mode de réalisation par la deuxième dérivation fluidique O, puis préférentiellement le premier économiseur 15, puis le condenseur 5, puis le second côté de l'économiseur 15, puis l'évaporateur 2, puis l'éjecteur 6 et/ou l'absorbeur 3, plus précisément dans les connexions fluidiques A, B, B' I, I', O, J, K, L, M, N. La solution réfrigérant-absorbant riche en absorbant (haute concentration d'absorbant) mais pauvre en réfrigérant, dénommée couramment solution pauvre, circule du générateur 4 vers l'absorbeur 3 dans le circuit à solution, plus précisément dans les connexions fluidiques F, G, H. La solution pauvre en absorbant (faible concentration d'absorbant) mais riche en réfrigérant, dénommée couramment solution riche, circule de l'absorbeur 3 vers le générateur 4 dans le circuit à solution, plus précisément dans les connexions fluidiques C, D E.

Ce type de TCA 1 fonctionne selon trois niveaux de température : un niveau de température basse correspondant à la température de la source froide 13 circulant au condenseur 5, préférentiellement la température est dite basse lorsqu'elle est inférieure ou égale à 45°C, un niveau de température intermédiaire correspondant à la température de la source chaude 10 et de la source chaude 11 correspondant avantageusement respectivement à la température d'évaporation du fluide frigorigène dans l'évaporateur 2, mais également à la température motrice du générateur 4, préférentiellement la température est dite intermédiaire lorsqu'elle est supérieure ou égale à 80°C et inférieure à 100°C et un niveau de température élevée correspondant à la température de la source à chauffer circulant dans l'absorbeur 3 correspondant avantageusement la température d'absorption dans l'absorbeur 3 préférentiellement la température est dite élevée lorsqu'elle est supérieure ou également à 100°C.

Selon l'invention, le transformateur de chaleur à absorption 1 comprend un éjecteur 6. L'injecteur 6 est agencé entre le générateur 4 et le condenseur 3 et entre l'évaporateur 2 et le condenseur 5.

L'éjecteur 6 est un composant simple sans pièce mobile et peu coûteux configuré pour mélanger un fluide primaire haute pression et un fluide secondaire à basse pression de sorte à produire un mélange sortant à pression intermédiaire. Préférentiellement, le fluide primaire est à l'état gazeux. Préférentiellement, le fluide secondaire est à l'état gazeux. Préférentiellement le mélange sortant est à l'état gazeux.

Le circuit fluidique assure la connexion fluidique des composants du TCA 1. Plus précisément, le circuit fluidique comprend les différents composants et des connexions fluidiques agencées entre les différents composants.

Selon l'invention, le circuit fluidique assure la connexion fluidique du générateur 4 à l'éjecteur 6 et/ou du générateur 4 au condenseur 5, de l'éjecteur 6 au condenseur 5, du condenseur 5 à l'évaporateur 2, de l'évaporateur 2 à l'absorbeur 3 et de l'évaporateur 2 à l'éjecteur 6, de l'absorbeur 3 au générateur 4 et du générateur 4 à l'absorbeur 3.

L'éjecteur 6 comprend une entrée de fluide primaire 60 connectée fluidiquement à la sortie 21 de l'évaporateur 2, soit directement soit partiellement par une connexion fluidique et un éventuel premier organe de commande, et une entrée de fluide secondaire 61 connectée fluidiquement à la sortie 41 du générateur 4 soit directement soit par un éventuel deuxième organe de commande. L'injecteur 6 comprend une sortie d'un mélange 62 connectée fluidiquement à l'entrée 50 du condenseur 5, soit directement soit préférentiellement en passant par le premier économiseur 15.

La présence de l'éjecteur 6 sur un cycle de transformation de chaleur par absorption permet de définir trois niveaux de pression sur le transformateur 1. Avantageusement, l'évaporateur 2 et l'absorbeur 3 fonctionnent respectivement à une pression pouvant être identique ou non et correspondant à une pression dite haute pression tandis que le générateur 4 fonctionne à une pression correspondant à une pression dite basse pression et le condenseur 5 fonctionne à une pression correspondant à une pression dite pression intermédiaire. Avantageusement, l'éjecteur 6 permet de générer une pression intermédiaire. Le passage d'une haute pression à une basse pression de l'absorbeur 3 vers le générateur 4, préférentiellement au niveau du circuit à solution décrit ci-après, est assuré par le détendeur 9 tandis que le passage d'une basse pression à une haute pression du générateur 4 vers l'absorbeur 3, préférentiellement au niveau du circuit à solution décrit ci-après, est assuré par la pompe à solution 8.

On entend par haute pression une pression préférentiellement supérieure ou égale à 25 bars (soit 2500 KPa), une basse pression est une pression préférentiellement inférieure ou égale à 9 bars (soit 900 KPa) et la pression intermédiaire s'entend comme une pression comprise entre la haute pression et la basse pression, par exemple supérieure à 10 bars (soit 1 000 KPa) et inférieure à 20 bars (soit 2 000 KPa).

L'éjecteur 6 découple le niveau de pression entre le générateur 4 et le condenseur 5. Le générateur 4 est capable de produire de la vapeur que le condenseur 5 peut ensuite condenser qu'elle que soit la température de la source froide 13 circulant dans le condenseur 5, préférentiellement inférieure ou égale à 45°C et pouvant être supérieure ou égale à 25 °C. L'utilisation d'un éjecteur 6 permet de garantir le fonctionnement du transformateur de chaleur 1 par absorption en toute saison et de fournir de la chaleur de manière ininterrompue tout au long de l'année.

Le transformateur de chaleur à absorption 1 selon l'invention comprend un générateur 4 décrit en détail ci-après.

Le générateur 4 est configuré pour vaporiser le fluide frigorigène. La génération de vapeur de fluide frigorigène est réalisée à une pression correspondant à une basse pression. Le générateur 4 est ainsi configuré pour fonctionner à une pression correspondant à une basse pression.

La solution de travail dite riche provenant de l'absorbeur 3 est chauffée par une source de chaleur 11 correspondant avantageusement à une source à valoriser à moyenne température qui traverse le générateur 4. Grâce à cette chaleur, une partie du fluide réfrigérant, par exemple l'ammoniac, contenue dans la solution riche ainsi que des traces d'eau sont désorbées. La solution de travail appauvrie issue de ce processus retourne à l'absorbeur 3, préférentiellement par le circuit à solution. Le processus de désorption a lieu à basse pression, et requiert une quantité de chaleur. La vapeur de fluide frigorigène produite par le générateur 4, également parfois dénommée désorbeur, est acheminée vers le condenseur 5, parfois en passant par un rectifieur, et un premier économiseur 15 et par un éjecteur 6 selon un mode de réalisation ou par une deuxième dérivation fluidique O selon un autre mode de réalisation.

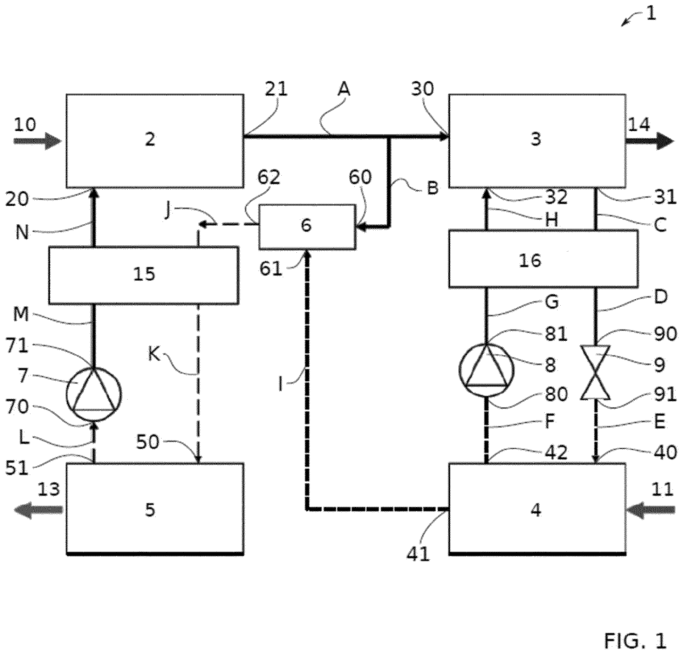

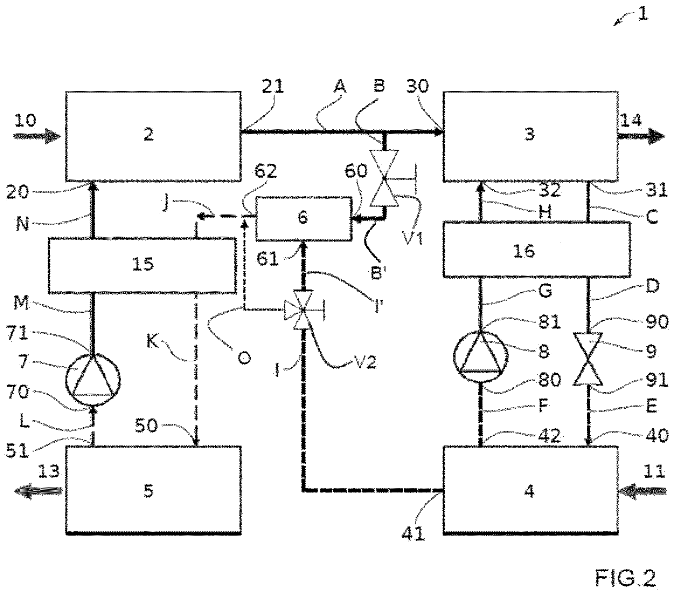

Le générateur 4 est connecté fluidiquement à l'absorbeur 3 et à l'éjecteur 6. Le générateur 4 comprend avantageusement une entrée 40 de la solution de travail, préférentiellement une solution de travail dite riche, en connexion fluidique, préférentiellement indirecte avec l'absorbeur 3, plus précisément avec une sortie 31 de l'absorbeur 3, de sorte à alimenter le générateur 4 en solution de travail dite riche. Le fluide frigorigène de la solution de travail riche est alors vaporisé dans le générateur 4. La solution de travail dite pauvre repart vers l'absorbeur 3 par une sortie 42. Le générateur 4 comprend avantageusement une sortie 42 de la solution de travail préférentiellement une solution de travail dite pauvre en connexion fluidique, préférentiellement indirecte avec l'absorbeur 3, plus précisément avec l'entrée 32 de l'absorbeur 3, de sorte à alimenter l'absorbeur 3 en solution de travail dite pauvre. Le générateur 4 comprend une sortie 41 du fluide frigorigène vaporisé. La sortie 41 est connectée fluidiquement avec l'entrée 61 de fluide secondaire de l'éjecteur 6, directement selon un premier mode de réalisation (figure 1) ou indirectement selon un deuxième mode de réalisation (figure 2) au travers d'un deuxième organe de commande étant une vanne trois voies V2.

Avantageusement, le transformateur de chaleur à absorption 1 comprend entre le générateur 4 et l'absorbeur 3, un deuxième économiseur 16, un détendeur 9 et une pompe à solution 8. Ces composants sont agencés sur un circuit fluidique dit circuit à solution. Le deuxième économiseur 16 et le détendeur 9 assurent la circulation de la solution de travail de l'absorbeur 3 vers le générateur 4 et inversement le deuxième économiseur 16 et la pompe à solution 8 assurent la circulation de la solution de travail entre le générateur 4 et l'absorbeur 3. Plus spécifiquement, la solution de travail dite riche et la solution de travail dite pauvre circulent respectivement de l'absorbeur 3 vers le générateur 4 en passant par le deuxième économiseur 16 et le détendeur 9 et du générateur 4 vers l'absorbeur 3 en passant par la pompe à solution 8 et le deuxième économiseur 16.

Le générateur 4 comprend une connexion fluidique avec le condenseur 5 sur laquelle est agencé l'éjecteur 6. Selon un premier mode de réalisation, le générateur 4 est ainsi connecté fluidiquement directement à l'éjecteur 6, et indirectement au condenseur 5, permettant la sortie de la vapeur de fluide frigorigène hors du générateur 4. Selon un deuxième mode de réalisation, le générateur 4 est connecté fluidiquement indirectement à l'éjecteur 6 par un deuxième organe de commande telle qu'une vanne trois voies V2 et avantageusement le générateur 4 est connecté fluidiquement indirectement au condenseur 5 par un deuxième organe de commande telle qu'une vanne trois voies V2 et une deuxième dérivation fluidique O. Le générateur 4 comprend également une entrée et une sortie de source de chaleur 11 permettant l'apport de chaleur nécessaire à la vaporisation du fluide frigorigène. Selon l'invention, la source de chaleur 11, ou source chaude, comprend au moins partiellement préférentiellement uniquement de l'énergie fatale à une température de l'ordre de 70 °C minimum, préférentiellement supérieure ou égale à 80 °C.

Selon un mode de réalisation préféré, le TCA 1 comprend une deuxième dérivation fluidique O de l'éjecteur 6 assurant la connexion fluidique entre le générateur 4 et le condenseur 5, plus précisément le premier économiseur 15 sans passer par l'éjecteur 6. Avantageusement, le TCA 1 comprend un deuxième organe de commande telle qu'une vanne trois voies V2 et une deuxième dérivation fluidique O. La vanne trois voies V2 est agencée sur la connexion fluidique I-I' assurant la connexion fluidique du générateur 4 vers l'éjecteur 6. La vanne trois voies V2 est configurée pour assurer la répartition du flux de fluide frigorigène issu du générateur 4 entre l'éjecteur 6 et la deuxième dérivation fluidique O. La répartition du flux peut prendre n'importe quelle valeur entre 0 % du flux transmis à l'éjecteur 6 et 100 % du flux transmis à la deuxième dérivation fluidique O, et donc au premier économiseur 15 si présent, ou au condenseur 5 s'il est absent, à 100 % du flux transmis à l'éjecteur 6 et 0 % du flux transmis à la deuxième dérivation fluidique O.

Selon une préférence, le TCA 1 comprend une unité de commande configurée pour commander le ou les organes de commande et notamment la vanne trois voies V2. Avantageusement, le TCA 1 comprend divers capteurs de températures et/ou pressions et/ou débit répartis sur le circuit fluidique, que ce soit sur les composants ou sur les connexions fluidiques. Avantageusement, les divers capteurs sont reliés à l'unité de commande est permettent préférentiellement d'optimiser le contrôle du ou des organes de commande en fonction des différentes données de pression et/ou température et/ou débit et/ou besoins de chaleur au niveau de la source à chauffer et en particulier en fonction de la température de la source froide 13 du condenseur 5 constituée au moins partiellement avantageusement de l'air ambiant.

Par exemple, lorsque la température de la source froide 13 dépasse une température de consigne, à titre d'exemple 25°C, l'unité de commande contrôle la vanne trois voies V2 pour la placer dans une deuxième configuration de fonctionnement dans laquelle la circulation fluidique entre le générateur 4 et le condenseur 5, plus précisément le premier économiseur 15 s'il est présent, se fait au moins partiellement au travers de l'éjecteur 6, c'est-à-dire dans laquelle le générateur 4 est en connexion fluidique avec l'éjecteur 6 ; c'est-à-dire dans laquelle la connexion fluidique est ouverte. Avantageusement, la circulation fluidique se fait majoritairement par l'éjecteur 6 c'est-à-dire à plus de 50% par l'éjecteur 6 jusqu'à 100%, c'est à dire sans circulation dans la deuxième dérivation fluidique O. Alternativement, lorsque la température de la source froide 13 est inférieure ou égale à une température de consigne, à titre d'exemple 25°C, l'unité de commande contrôle la vanne trois voies V2 pour la placer dans une première configuration de fonctionnement dans laquelle la circulation fluidique entre le générateur 4 et le condenseur 5, plus précisément le premier économiseur 15 s'il est présent, se fait par la deuxième dérivation fluidique O c'est-à-dire dans laquelle le générateur 4 est en connexion fluidique avec le premier économiseur 15 ou le condenseur 5 sans être en connexion fluidique avec l'éjecteur 6 ; c'est-à-dire dans laquelle la connexion fluidique est fermée entre le générateur 4 et l'éjecteur 6. Avantageusement, la circulation fluidique se fait majoritairement par la deuxième dérivation fluidique O c'est-à-dire à plus de 50% par la deuxième dérivation fluidique O jusqu'à 100%, c'est à dire sans circulation dans l'éjecteur 6.Le transformateur de chaleur à absorption 1 selon l'invention comprend un condenseur 5 décrit en détail ci-après.

Le condenseur 5 est configuré pour condenser la vapeur de fluide frigorigène issue du générateur 4. La vapeur de fluide frigorigène est refroidie par une source froide 13 pour être condensée et devenir à nouveau liquide. Selon l'invention, la condensation de la vapeur de fluide frigorigène est réalisée à une pression correspondant à une pression intermédiaire. Le condenseur 5 est configuré pour fonctionner à une pression correspondant à une pression intermédiaire, ce qui permet d'utiliser une source froide 13 à une température supérieure que dans un transformateur de chaleur à absorption de l'état de la technique.

Le condenseur 5 est connecté fluidiquement au générateur 4 et à l'évaporateur 1. Le condenseur 5 comprend une connexion fluidique J, K, issue de l'éjecteur 6 permettant l'entrée d'un flux de vapeur de fluide frigorigène dans le condenseur 5, préférentiellement directement ou au travers d'un rectifieur et/ou d'un premier économiseur 15. Le flux de vapeur de fluide frigorigène arrivant dans le condenseur 5 est avantageusement à une quinzième pression dite pression intermédiaire. À titre d'exemple, le flux de vapeur de fluide frigorigène est à une seizième pression de 15 bars (soit 1 500 KPa).

Le condenseur 5 comprend une entrée 50 du flux de vapeur de fluide frigorigène est une sortie 51 du flux de fluide frigorigène ayant été condensé.

Le condenseur 5 comprend une connexion fluidique, L, M, N avec l'évaporateur 2 permettant la sortie du fluide frigorigène à l'état liquide, avantageusement au travers d'une pompe 7 destinée à amener le fluide frigorigène à sa pression d'évaporation, préférentiellement une dix-septième pression correspondant à une haute pression. Le condenseur 5 comprend également une source froide 13 constituée au moins partiellement selon l'invention de l'air ambiant. La source froide 13 circule dans le condenseur 5 de sorte à assurer le refroidissement de la vapeur de fluide frigorigène et ainsi permettre sa condensation.

Selon une possibilité non représentée, le transformateur de chaleur à absorption 1 comprend un rectifieur disposé entre le générateur 4 et le condenseur 5. Le rectifieur permet d'enlever par condensation les traces d'eau entrainées avec le fluide frigorigène en sortie du générateur 4, si la teneur en eau de la vapeur de réfrigérant est trop importante, et assure ainsi le fonctionnement du transformateur 1 dans ces conditions. Préférentiellement, le rectifieur est dans ce cas agencé sur la connexion fluidique I assurant la connexion fluidique entre le générateur 4 et l'éjecteur 6 ou la vanne trois voies V2 si présente.

Avantageusement, le transformateur de chaleur à absorption 1 comprend une pompe 7 agencée entre le condenseur 5 et l'évaporateur 2. La pompe 7 est configurée pour comprimer le fluide frigorigène à l'état liquide issu du condenseur 5. La pompe 7 comprend avantageusement une entrée 70 du flux de fluide frigorigène à l'état liquide à une douzième pression comprise dans la gamme de pression intermédiaire et une sortie 71 du flux de fluide frigorigène à l'état liquide à une treizième pression comprise dans la gamme de haute pression.

Avantageusement, le transformateur de chaleur à absorption 1 comprend un premier économiseur 15 jouant le rôle de préchauffage ou surchauffage. Le premier économiseur 15 est agencé entre le condenseur 5 et l'évaporateur 2. Le premier économiseur 15 est un échangeur thermique agencé sur la connexion fluidique du condenseur 5 vers l'évaporateur 2 et sur la connexion fluidique de l'éjecteur 6 vers le condenseur 5 et sur la connexion fluidique de la deuxième dérivation O vers le condenseur 5. Ainsi, le fluide frigorigène chauffé à pression intermédiaire sortant de l'éjecteur 6 ou le fluide frigorigène chauffé et vaporisé sortant du générateur 4 en passant par la deuxième dérivation fluidique, traverse le premier économiseur 15 pour transmettre une partie de sa chaleur au fluide frigorigène sortant du condenseur 5 permettant ainsi de préchauffer le fluide frigorigène avant son entrée dans l'évaporateur 2. Le premier économiseur 15 permet de récupérer de l'énergie et donc de réduire la taille du condenseur 5 et de l'évaporateur 2 et ainsi d'améliorer de manière notable les performances de la machine. La pertinence de ce composant est fonction des températures de fonctionnement, la taille de la machine et le coût des échangeurs.

Le transformateur de chaleur à absorption selon l'invention comprend un évaporateur 2 décrit en détail ci-après.

L'évaporateur 2 est configuré pour vaporiser le fluide frigorigène. Dans ce composant, la pression est élevée et un apport de chaleur à moyenne température est nécessaire pour permettre l'évaporation du frigorigène. L'évaporateur 2 est configuré pour fonctionner à une pression choisie dans une gamme des hautes pressions. Plus spécifiquement, le flux de fluide réfrigérant circulant au sein de l'évaporateur 2 présente une pression comprise dans la gamme des hautes pressions.

L'évaporateur 2 est connecté fluidiquement au condenseur 5 et à l'absorbeur 3. L'évaporateur 2 comprend une connexion fluidique M issue du condenseur 5, plus précisément selon le mode de réalisation illustrée issue du premier économiseur 15.

L'évaporateur 2 comprend une connexion fluidique A avec l'absorbeur 3, permettant la sortie de la vapeur de fluide frigorigène, préférentiellement directement. L'évaporateur 2 comprend également une entrée et une sortie d'une source de chaleur 10. Le changement de phase du fluide frigorigène de l'état liquide à l'état vapeur s'accompagne d'une transmission de chaleur de la source chaude 10 au fluide frigorigène. La source chaude 10 transmet de la chaleur et voit ainsi sa température s'abaisser. Selon un mode de réalisation de l'invention, la source chaude 10 est avantageusement la même source chaude 11 alimentant le générateur 4.

Le TCA 1 comprend avantageusement une dérivation fluidique B agencée soit en parallèle de la connexion fluidique A, soit directement depuis la sortie 21 de l'évaporateur 2. La dérivation fluidique B est agencée de sorte à permettre la circulation d'au moins une partie du flux de fluide réfrigérant à l'état gazeux sortant de l'évaporateur 2 dans l'éjecteur 6, préférentiellement directement ou indirectement au travers d'un premier organe de commande. La dérivation fluidique B est agencée en dérivation de la connexion fluidique A reliant l'évaporateur 2 vers l'absorbeur 3.

Selon un mode de réalisation, le TCA 1 comprend au moins un premier organe de commande tel que par exemple une vanne deux voies V1. Le premier organe de commande, plus précisément la vanne deux voies V1, est avantageusement agencé de sorte à contrôler la répartition du flux de fluide frigorigène à l'état gazeux issu de l'évaporateur 2 entre la connexion fluidique A et la dérivation fluidique B, c'est-à-dire entre l'éjecteur 6 et l'absorbeur 3. Selon un mode de réalisation (non représenté), le premier organe de commande est agencé à la jonction de la dérivation fluidique B sur la connexion fluidique A, selon une autre possibilité représentée en figure 2, le premier organe de commande est une vanne deux voies V1 agencée sur la dérivation fluidique B.

Le premier organe de commande, plus précisément la vanne deux voies V1, est configuré pour assurer la répartition du flux de fluide frigorigène à l'état gazeux issu de l'évaporateur 2 entre l'absorbeur 3 et l'éjecteur 6 pouvant prendre n'importe quelle valeur entre 0 % du flux transmis à l'éjecteur 6 et 100 % du flux transmis à l'absorbeur 3 à 100 % du flux transmis à l'éjecteur 6 et 0 % du flux transmis à l'absorbeur 3. Préférentiellement, il existe toujours un flux transmis à l'absorbeur 3.

Selon une préférence, l'unité de commande décrit ci-dessus est configurée pour commander le premier organe de commande et le deuxième organe de commande.

Avantageusement, le transformateur de chaleur 1 est configuré pour prendre une première configuration de fonctionnement. Préférentiellement, l'unité de commande contrôle le ou les organes de commande et notamment la vanne deux voies V1 pour prendre une première configuration. La première configuration correspond à une production de chaleur dans une ambiance inférieure ou égale à 25°C dans laquelle l'organe de commande, la vanne deux voies V1, bloque la connexion fluidique dans la dérivation fluidique B ; la connexion fluidique A étant ouverte entre l'évaporateur 2 et l'absorbeur 3. A titre d'exemple illustré la vanne deux voies V1 ferme la circulation fluidique sur la dérivation fluidique B, l'ensemble du flux de fluide frigorigène à l'état gazeux est orienté vers l'absorbeur 3 et ne circule pas dans l'éjecteur 6.

Avantageusement, le transformateur de chaleur 1 est configuré pour prendre une deuxième configuration de fonctionnement.

Préférentiellement, l'unité de commande contrôle le ou les organes de commande et notamment la vanne deux voies V1 pour prendre une deuxième configuration. La deuxième configuration correspond à une production de chaleur dans une ambiance supérieure à 25°C dans laquelle l'organe de commande autorise la connexion fluidique dans la dérivation fluidique B ; la connexion fluidique A restant ouverte entre l'évaporateur 2 et l'absorbeur 3. A titre d'exemple illustré la vanne deux voies V1 ouvre la circulation fluidique sur la dérivation fluidique B, au moins une partie du flux de fluide frigorigène à l'état gazeux est orienté dans l'éjecteur 6.

Le transformateur de chaleur à absorption 1 selon l'invention comprend un absorbeur 3 décrit en détail ci-après.

L'absorbeur 3 est configuré pour condenser la vapeur de fluide frigorigène issue de l'évaporateur 2.

Dans ce composant, la pression est élevée. L'absorbeur 3 est configuré pour fonctionner dans une gamme de pression correspondant à la gamme des hautes pressions. Plus spécifiquement, les flux de fluide réfrigérant et solution de travail circulant au sein de l'absorbeur 3 présentent une pression comprise dans la gamme des hautes pressions.

L'absorbeur comprend une entrée 30, une entrée 32 et une sortie 31.

L'entrée 30 est connectée fluidiquement à la sortie 21 de l'évaporateur 2. La vapeur de fluide frigorigène issue de l'évaporateur 2 pénètre dans l'absorbeur 3 par l'entrée 30.

L'entrée 32 connectée fluidiquement à la sortie 42 du générateur 4. L'absorbant, ou solution de travail composé d'eau et d'une faible fraction de réfrigérant, également dénommée solution pauvre, issu du générateur 4 pénètre dans l'absorbeur 3 par l'entrée 32 et est distribué le long de l'absorbeur 3. La solution pauvre absorbe la vapeur de réfrigérant qui provient de l'évaporateur 2 et devient une solution enrichie, proche de sa condition saturée.

La sortie 31 connectée fluidiquement à une entrée 40 du générateur 4. La solution riche ressort de l'absorbeur 3 par la sortie 31 pour être transmise au générateur 4. Le processus d'absorption se produit à haute pression, libérant une quantité de chaleur qui est dissipée vers la source à chauffer dont on cherche à élever la température.

L'absorbeur 3 est connecté fluidiquement à l'évaporateur 2 et au générateur 4. L'absorbeur 3 comprend une connexion fluidique A issue de l'évaporateur 2 permettant l'entrée du fluide frigorigène à l'état de vapeur dans l'absorbeur 3, préférentiellement directement. L'absorbeur 3 comprend une connexion fluidique C, D, E avec le générateur 4, plus précisément à un deuxième économiseur 16 au travers duquel la solution de travail dite riche de l'absorbeur 3 est réchauffée avant d'être transmise au générateur 4. Puis, la solution de travail, dite riche, sortie de l'absorbeur 3 en direction du générateur 4, ressort du deuxième économiseur 16 puis passe, préférentiellement, au travers d'un détendeur 9 avant d'atteindre le générateur 4. Avantageusement, le deuxième économiseur 16 est un échangeur transmettant de la chaleur de la solution, dite pauvre, issue du générateur 4 vers la solution, dite riche, issue de l'absorbeur 3. Le deuxième économiseur 16 permet une récupération d'énergie permettant de réduire la taille de l'absorbeur 3 et du générateur 4 et ainsi améliorer de manière notable les performances du transformateur 1. Avantageusement, le générateur 4 comprend une connexion fluidique H, G, F, avec l'absorbeur 3, plus précisément avec une pompe à solution 8. La connexion fluidique permet l'entrée de la solution de travail, dite pauvre, issue du générateur 4 dans l'absorbeur 3, préférentiellement, au travers de la pompe 8 puis du deuxième économiseur 16. Dans l'absorbeur 3, le changement de phase du fluide frigorigène de l'état vapeur à l'état liquide s'accompagne d'une libération de chaleur qui est transmise à une source à chauffer. C'est cette production de chaleur au niveau de l'absorbeur 3 qui est particulièrement recherchée selon l'invention. La source de chaleur produite par l'absorbeur 3, produisant la source chauffée 14 peut être, selon une possibilité, directement utilisée notamment dans l'industrie. La température de la source chauffée 14 en sortie de l'absorbeur 3 est avantageusement au moins de 80°C, préférentiellement 100°C, voire 120°C.

Le circuit fluidique comprend une connexion fluidique A assurant la connexion fluidique de l'évaporateur 2 vers l'absorbeur 3, préférentiellement directement, plus précisément de la sortie 21 de l'évaporateur 2 à l'entrée 30 de l'absorbeur 3. La connexion fluidique A assure la circulation d'au moins une partie du flux de fluide réfrigérant à l'état gazeux et à une première pression correspondant à une haute pression depuis l'évaporateur 2 jusqu'à l'absorbeur 3.

Le circuit fluidique comprend une dérivation fluidique B assurant la connexion fluidique de l'évaporateur 2 vers l'éjecteur 6, préférentiellement directement, plus précisément de la sortie 21 de l'évaporateur 2, ou de la connexion fluidique A, à l'entrée 60 de fluide primaire de l'éjecteur 6 et/ou selon un deuxième mode de réalisation, la dérivation fluidique B assure la connexion fluidique de l'évaporateur 2 vers le premier organe de commande. La dérivation fluidique B assure la circulation d'au moins une partie du flux de fluide réfrigérant à l'état gazeux et à une deuxième pression correspondant à une haute pression depuis l'évaporateur 2 jusqu'à l'éjecteur 6 et/ jusqu'au premier organe de commande.

Le circuit fluidique comprend une dérivation fluidique B' assurant la connexion fluidique du premier organe de commande vers l'éjecteur 6.

Le circuit fluidique comprend une connexion fluidique C assurant la connexion fluidique de l'absorbeur 3 vers le deuxième économiseur 16, préférentiellement directement, plus précisément de la sortie 31 de l'absorbeur 3 à l'entrée du deuxième économiseur 16. La connexion fluidique C assure la circulation du flux d'une solution de travail, dite riche, et à une troisième pression correspondant à une haute pression depuis l'absorbeur 3 en direction du générateur 4.

Le circuit fluidique comprend une connexion fluidique D assurant la connexion fluidique du deuxième économiseur 16, préférentiellement directement, vers un détendeur 9. La connexion fluidique D assure la circulation du flux de la solution de travail dite riche, refroidie après son passage dans le deuxième économiseur 16 et à une quatrième pression correspondant à une haute pression depuis le deuxième économiseur 16 en direction du générateur 4.

Le circuit fluidique comprend une connexion fluidique E assurant la connexion fluidique du détendeur 9, préférentiellement directement, vers le générateur 4, plus précisément vers l'entrée 40 du générateur 4. La connexion fluidique E assure la circulation du flux de la solution de travail riche réchauffée et à une cinquième pression correspondant à une basse pression depuis le détendeur 9 vers le générateur 4.

Le détendeur 9 assure une diminution de la pression du flux de la solution de travail riche avant son entrée dans le générateur 4.

Le circuit fluidique comprend une connexion fluidique F assurant la connexion fluidique du générateur 4, plus précisément la sortie 42 du générateur 4, préférentiellement directement, vers une pompe à solution 8. La connexion fluidique F assure la circulation du flux de la solution de travail pauvre et à une sixième pression correspondant à une basse pression depuis le générateur 4 en direction de l'absorbeur 3.

Le circuit fluidique comprend une connexion fluidique G assurant la connexion fluidique de la pompe à solution 8, préférentiellement directement, vers le deuxième économiseur 16. La connexion fluidique G assure la circulation du flux de la solution de travail pauvre et à une septième pression correspondant à une haute pression depuis la pompe à solution 8 en direction de l'absorbeur 3.

La pompe à solution 8 assure une compression de la solution de travail et donc une augmentation de la pression du flux de la solution de travail pauvre avant son entrée dans l'absorbeur 3.

Le circuit fluidique comprend une connexion fluidique H assurant la connexion fluidique du deuxième économiseur 16, préférentiellement directement, vers l'absorbeur 3. La connexion fluidique H assure la circulation du flux de la solution de travail pauvre et réchauffée après son passage dans le deuxième économiseur 16 et à une huitième pression correspondant à une haute pression depuis le deuxième économiseur 16 vers l'absorbeur 3.

Le circuit fluidique comprend une connexion fluidique I assurant la connexion fluidique du générateur 4, plus précisément de la sortie 41 du générateur 4, selon un mode de réalisation directement vers l'éjecteur 6, plus précisément l'entrée 61 de fluide secondaire de l'éjecteur 6 ou selon un deuxième mode de réalisation vers la vanne trois voies V2 si présente. La connexion fluidique I assure la circulation du flux du fluide réfrigérant à l'état gazeux et à une neuvième pression correspondant à une basse pression, issu du générateur 3 vers l'éjecteur 6 et/ou la vanne trois voies V2 si présente.

Dans le mode de réalisation comprenant une vanne trois voies V2, le circuit fluidique comprend une connexion fluidique l'assurant la connexion fluidique de la vanne trois voies V2 à l'éjecteur 6.

Le circuit fluidique comprend une deuxième dérivation fluidique O assurant la connexion fluidique de la vanne trois voies vers le condenseur 5, préférentiellement directement vers le premier économiseur 15.

Le circuit fluidique comprend une connexion fluidique J assurant la connexion fluidique de l'éjecteur 6, plus précisément de la sortie 62 du mélange, vers le condenseur 5, préférentiellement directement vers le premier économiseur 15. La connexion fluidique J assure la circulation du flux du fluide réfrigérant à l'état gazeux et à une dixième pression correspondant à une pression intermédiaire, issu du l'éjecteur 6 au premier économiseur 15 en direction du condenseur 5.

L'éjecteur 6 assure un mélange d'un fluide primaire correspondant à au moins une partie du flux de fluide frigorigène à l'état gazeux à la deuxième pression correspondant à une haute pression issue de l'évaporateur 2 et le flux, préférentiellement sa totalité, de fluide frigorigène à l'état gazeux à une neuvième pression correspondant à une basse pression, issu du générateur 3 de sorte à produire un flux de fluide frigorigène à l'état gazeux et à une dixième pression correspondant à une pression intermédiaire. L'éjecteur 6 permet d'introduire dans le circuit fluidique un troisième niveau de pression.

Le circuit fluidique comprend une connexion fluidique K assurant la connexion fluidique du premier économiseur 15, préférentiellement directement vers le condenseur 5, plus précisément l'entrée 50 du condenseur 5. La connexion fluidique K assure la circulation du flux du fluide réfrigérant à l'état gazeux refroidi après son passage dans le premier économiseur 15 et à une onzième pression correspondant à une pression intermédiaire, issu du l'éjecteur 6 vers le condenseur 5.

Le circuit fluidique comprend une connexion fluidique L assurant la connexion fluidique du condenseur 5, plus précisément la sortie 51 du condenseur 5, préférentiellement directement à une pompe 7, en direction de l'évaporateur 2. La connexion fluidique L assure la circulation du flux du fluide réfrigérant à l'état liquide et à une douzième pression correspondant à une pression intermédiaire, issu du condenseur 5 vers la pompe 7.

Le circuit fluidique comprend une connexion fluidique M assurant la connexion fluidique de la pompe 7 à l'évaporateur 2 et préférentiellement en passant par le premier économiseur 15. La connexion fluidique M assure la circulation du fluide réfrigérant à l'état liquide et à une treizième pression correspondant à une haute pression, issu de la pompe 7 vers le premier économiseur 15.

La pompe 7 assure une compression du fluide réfrigérant à l'état liquide et donc une augmentation de la pression du flux du fluide réfrigérant à l'état liquide avant son entrée dans l'évaporateur 2.

Le circuit fluidique comprend une connexion fluidique N assurant la connexion fluidique du premier économiseur 15 à l'évaporateur 2, préférentiellement directement et plus précisément à l'entrée 20 de l'évaporateur 2. La connexion fluidique N assure la circulation du fluide réfrigérant à l'état liquide réchauffé après son passage dans le premier économiseur 15 et à une quatorzième pression correspondant à une haute pression issue du premier économiseur 15 vers l'évaporateur 2.

Les pressions : première, deuxième, troisième, quatrième, septième, huitième, dix-septième peuvent être ou non identiques mais correspondent toutes à des hautes pressions.

Les pressions : cinquième, sixième, neuvième, peuvent être ou non identiques mais correspondent toutes à des basses pressions.

Les pressions : dixième, onzième, douzième et seizième peuvent être ou non identiques mais correspondent toutes à des pressions intermédiaires.

Exemple : Évaluation des performances d'un TCA selon l'invention en conditions estivales.

Les performances de l'éjecteur ont été choisies à l'aide des résultats expérimentaux pour un éjecteur à ammoniac rapportés par Sankarlal et Mani T, "Experimental investigations on ejector réfrigération system with ammonia," Renew. Energy, vol. 32, no. 8, pp. 1403-1413, 2007, doi: 10.1016/j.renene.2006.05.008.

Les paramètres retenus sont :
- un ratio d'entrainement de 0,3 , un ratio de compression de 1,8 et un ratio d'expansion de 3 ;
- une température moyenne de la source de chaleur 10 et de la source de chaleur 11, étant de la chaleur fatale à valoriser, de 80°C ;
- une température de la source à chauffer en entrée de l'absorbeur de 100°C ;
- la température extérieure est de 35°C, l'air ambiant est utilisé comme source froide 13 présentant ainsi une température de 35°C.

TCA simple (état de la technique sans éjecteur) :
- COP_th=0,20
- COP_elec=2,6
- ΔT abs=0,4°C

TCA selon la figure 1
- COP_th=0,18
- COP_elec=38
- ΔT_abs=11,2 °C

Les résultats de cet essai montrent que l'utilisation d'un éjecteur 6 parfait permet d'améliorer le COP_elec de la machine d'un facteur 20 (dans la configuration TCA, seule l'énergie électrique est une source de dépense) et le COP_th de 0,2 à 0,18. Le point le plus important à noter est la différence de température de la source à chauffer entre l'entrée et la sortie de l'absorbeur 3, ΔT_abs, qui passe de 0,4 à 11 °C. C'est le facteur le plus important de justification de l'utilisation d'un éjecteur dans le TCA car cette différence de température dicte la possibilité ou non de valoriser la source chaude par un nouveau procédé industriel. Une différence de 0,4°C n'est pas suffisante pour alimenter un procédé industriel alors qu'une différence de 11°C peut alimenter de nombreux procédés industriels ou des réseaux de chaleur.

### LISTE DES REFERENCES

1. Transformateur de chaleur
2. Évaporateur
3. Absorbeur
4. Générateur
5. Condenseur
6. Ejecteur
7. Pompe
8. Pompe à solution
9. Détendeur
10. Source chaude de l'évaporateur
11. Source chaude du générateur
13. Source froide du condenseur
14. Source chauffée
15. Economiseur
16. Economiseur
20. Entrée dans l'évaporateur
21. Sortie de l'évaporateur
30. Entrée dans l'absorbeur
31. Sortie de l'absorbeur
32. Seconde entrée dans l'absorbeur
40. Entrée dans le générateur
41. Sortie du générateur
42. Seconde Sortie du générateur
50. Entrée dans le premier condenseur
51. Sortie du condenseur
60. Entrée fluide primaire
61. Entrée fluide secondaire
62. Sortie mélange
70. Entrée dans la pompe
71. Sortie de la pompe
80. Entrée dans la pompe à solution
81. Sortie de la pompe à solution
90. Entrée dans le détendeur 91. Sortie du détendeur
V1. Vanne deux voies
V2. Vanne trois voies
A. Connexion fluidique assurant la connexion fluidique de l'évaporateur 2 vers l'absorbeur 3
B. Dérivation fluidique assurant la connexion fluidique de l'évaporateur 2 vers l'éjecteur 6 ou le premier organe de commande
B'. Dérivation fluidique assurant la connexion fluidique du premier organe de commande vers l'éjecteur 6
C. connexion fluidique assurant la connexion fluidique de l'absorbeur 3 vers le deuxième économiseur 16
D. connexion fluidique assurant la connexion fluidique du deuxième économiseur 16 vers un détendeur 9
E. connexion fluidique assurant la connexion fluidique du détendeur 9 vers le générateur 4,
F. connexion fluidique assurant la connexion fluidique du générateur 4, vers une pompe à solution 8.
G. connexion fluidique assurant la connexion fluidique de la pompe à solution 8 vers le deuxième économiseur 16
H. connexion fluidique assurant la connexion fluidique du deuxième économiseur 16 vers l'absorbeur 3
I. connexion fluidique assurant la connexion fluidique du générateur 4 vers l'éjecteur 6 ou la vanne trois voies V2
I'. connexion fluidique assurant la connexion fluidique de la vanne trois voies V2 vers l'éjecteur 6
J. connexion fluidique assurant la connexion fluidique de l'éjecteur 6 vers le premier économiseur 15
K. connexion fluidique assurant la connexion fluidique du premier économiseur 15 vers le condenseur 5
L. connexion fluidique assurant la connexion fluidique du condenseur 5, à une pompe 7
M. connexion fluidique assurant la connexion fluidique de la pompe 7 à l'évaporateur 2
N. connexion fluidique assurant la connexion fluidique du premier économiseur 15 à l'évaporateur 2
O. deuxième dérivation fluidique assurant la connexion fluidique de la vanne trois voies V2 vers le premier économiseur 15.

## Revendications

1. Transformateur de chaleur à absorption (1), destiné à la production de chaleur haute température, comprenant un circuit fluidique recevant une solution de travail formée d'un couple réfrigérant/absorbant et comprenant successivement en connexion fluidique: un évaporateur (2) fonctionnant à haute pression, un absorbeur (3) fonctionnant à haute pression et destiné à la production de chaleur haute température, un générateur (4) fonctionnant à basse pression et un condenseur (5), le circuit fluidique comprend une pompe (7) agencée entre le condenseur (5) et l'évaporateur (2), une pompe à solution (8) agencée entre le générateur (4) et l'absorbeur (3), et un détendeur (9) agencé en parallèle de la pompe à solution (8) entre l'absorbeur (3) et le générateur (4), **caractérisé en ce que** le transformateur (1) comprend, agencé sur le circuit fluidique, un éjecteur (6) placé entre le générateur (4) et le condenseur (5), et une dérivation fluidique (B) agencée, entre l'évaporateur (2) et l'éjecteur (6), en dérivation d'une connexion fluidique (A) reliant l'évaporateur (2) à l'absorbeur (3), et l'éjecteur (6) comprend une entrée de fluide primaire (60) à haute pression en connexion fluidique avec l'évaporateur (2) par la dérivation fluidique (B), une entrée de fluide secondaire (61) à basse pression en connexion fluidique avec une sortie (41) du générateur (4) et une sortie de mélange (62) à pression intermédiaire en connexion fluidique avec une entrée (51) du condenseur (5), le condenseur (5) fonctionnant à pression intermédiaire.

2. Transformateur selon la revendication précédente dans lequel le couple réfrigérant/absorbant formant la solution de travail est ammoniac/eau (NH₃/H₂O).

3. Transformateur selon l'une quelconque des revendications précédentes comprenant au moins un premier organe de commande agencé sur le circuit fluidique à la jonction entre la dérivation fluidique (B) et la connexion fluidique (A) ou sur la dérivation fluidique (B).

4. Transformateur selon la revendication précédente comprenant une unité de commande configurée pour commander le premier organe de commande de sorte à assurer la répartition du réfrigérant vers l'absorbeur (3) et/ou l'éjecteur (6).

5. Transformateur selon la revendication précédente configuré pour prendre alternativement
• une première configuration de fonctionnement lorsqu'une source froide (13) du condenseur (5) présente une température inférieure ou égale à une température de consigne et dans laquelle le premier organe de commande est contrôlé par l'unité de commande pour bloquer la circulation fluidique dans la dérivation fluidique (B) et dans l'éjecteur (6),
• une deuxième configuration de fonctionnement lorsque la source froide (13) du condenseur (5) présente une température supérieure à une température de consigne et dans laquelle le premier organe de commande est contrôlé par l'unité de commande pour autoriser la circulation fluidique dans la dérivation fluidique (B) et dans l'éjecteur (6).

6. Transformateur selon l'une quelconque des revendications précédentes comprenant une deuxième dérivation fluidique (O) agencée entre le générateur (4 ) et le condenseur (5), en dérivation de l'éjecteur (6), et une vanne trois voies (V2) agencée en amont de l'éjecteur (6) sur une connexion fluidique (I) reliant le générateur (4) à l'éjecteur (6) et une unité de commande configurée pour commander la vanne trois voies (V2) de sorte à assurer la répartition du réfrigérant vers la deuxième dérivation fluidique (5) et/ou l'éjecteur (6).

7. Transformateur selon la revendication précédente configuré pour prendre alternativement
• une première configuration de fonctionnement lorsqu'une source froide (13) du condenseur (5) présente une température inférieure ou égale à une température de consigne et dans laquelle la vanne trois voies (V2) est contrôlée par l'unité de commande pour autoriser la circulation fluidique dans la deuxième dérivation fluidique (O) et bloquer la circulation fluidique dans l'éjecteur (6),
• une deuxième configuration de fonctionnement lorsque la source froide (13) du condenseur (5) présente une température supérieure à une température de consigne et dans laquelle la vanne trois voies (V2) est contrôlée par l'unité de commande pour autoriser la circulation fluidique dans l'éjecteur (6).

8. Procédé de production de chaleur haute température par un transformateur de chaleur à absorption (1) selon l'une quelconque des revendications précédentes comprenant la circulation d'un flux de solution de travail formée par un couple réfrigérant/absorbant et d'un flux de réfrigérant dans le circuit fluidique, **caractérisé en ce qu'**il comprend la production de chaleur au niveau de l'absorbeur (3) et que dans une deuxième configuration de fonctionnement :
• l'entrée de fluide primaire (60) de l'éjecteur (6) est alimentée par au moins une partie d'un flux de réfrigérant à l'état gazeux et à haute pression issue de l'évaporateur (2),
• l'entrée de fluide secondaire (61) de l'éjecteur (6) est alimentée par un flux de réfrigérant à l'état gazeux et à basse pression issue du générateur (4),
• l'éjecteur (6) produit un mélange de réfrigérant à pression intermédiaire sortant par la sortie du mélange (62) en connexion fluidique avec le condenseur (5) fonctionnant à pression intermédiaire.

9. Procédé selon la revendication précédente dans lequel dans une première configuration alternative de fonctionnement la circulation du flux de solution de travail ne passe pas dans l'éjecteur (6).

10. Procédé selon l'une quelconque des deux revendications précédentes dans lequel l'unité de commande contrôle le premier organe de commande et la vanne trois voies (V2) de sorte à prendre alternativement la première configuration ou la deuxième configuration.

11. Procédé selon l'une quelconque des trois revendications précédentes dans lequel la pompe (7) assure l'augmentation de la pression du flux de réfrigérant à l'état liquide et à pression intermédiaire issu du condenseur (5) jusqu'à une haute pression.

12. Procédé selon l'une quelconque des quatre revendications précédentes dans lequel le condenseur (5) comprend une source froide (13) destinée à assurer le refroidissement au sein du condenseur (5), la source froide (13) étant à une température maximale inférieure ou égale à 45 °C.

13. Procédé selon la revendication précédente dans lequel la source froide (13) est de l'air ambiant.

14. Procédé selon l'une quelconque des deux revendications précédentes dans lequel l'unité de commande contrôle le premier organe de commande et la vanne trois voies (V2) de sorte à prendre
• une première configuration de fonctionnement lorsque une source froide (13) du condenseur (5) présente une température inférieure ou égale à une température de consigne et dans laquelle le premier organe de commande est contrôlé par l'unité de commande pour bloquer la circulation fluidique dans la dérivation fluidique (B) et dans l'éjecteur (6), la vanne trois voies (V2) est contrôlée par l'unité de commande pour autoriser la circulation fluidique dans la deuxième dérivation fluidique (O) et bloquer la circulation fluidique dans l'éjecteur (6), ou
• une deuxième configuration de fonctionnement lorsque la source froide (13) du condenseur (5) présente une température supérieure à une température de consigne et dans laquelle le premier organe de commande est contrôlé par l'unité de commande pour autoriser la circulation fluidique dans la dérivation fluidique (B) et dans l'éjecteur (6) et la vanne trois voies (V2) est contrôlée par l'unité de commande pour autoriser la circulation fluidique dans l'éjecteur (6).

15. Procédé selon l'une quelconque des six revendications précédentes dans lequel la basse pression est inférieure ou égale à 900 KPa, la haute pression est supérieure ou égale à 2500 KPa et la pression intermédiaire est supérieure à 1 000 KPa et inférieure à 2 000 KPa.
